Europäisches Patentamt

European Patent Office

Office européen des brevets

(11) Veröffentlichungsnummer: **0 418 407 A1**

# EUROPÄISCHE PATENTANMELDUNG

(21) Anmeldenummer: 89117324.7

(22) Anmeldetag: 19.09.89

(51) Int. Cl.5: **E04H 9/02, G21C 9/04**

(43) Veröffentlichungstag der Anmeldung:
**27.03.91 Patentblatt 91/13**

(84) Benannte Vertragsstaaten:
**BE CH DE ES FR GB IT LI NL SE**

(71) Anmelder: **Siemens Aktiengesellschaft**
**Wittelsbacherplatz 2**
**W-8000 München 2(DE)**

(72) Erfinder: **Danisch, Rüdiger, Dipl.-Ing. (TH)**
**Pechmannstrasse 40**
**W-8520 Erlangen(DE)**
Erfinder: **Graubner, Ulrich**
**Franzensbader Strasse 62**
**W-8552 Höchstadt(DE)**
Erfinder: **Zapf, Gabriele, Dipl.-Ing. (FH)**
**Grossreuther Strasse 59**
**W-8500 Nürnberg(DE)**

(54) **Verfahren und Einrichtung zum Schutz eines Gebäudes.**

(57) Die Erfindung betrifft ein Verfahren zum Schutz eines Gebäudes (1, 10). Sie betrifft auch eine Einrichtung zur Durchführung dieses Verfahrens. Es ist vorgesehen, daß eine auf das Gebäude (1, 10) einwirkende horizontale Kraft (K), insbesondere eine durch ein Erdbeben erzeugte Trägheitskraft, vom Gebäude (1, 10) auf eine das Gebäude (1, 10) umschließende Schutzkonstruktion abgeleitet wird, die eine vertikale Bewegung des Gebäudes (1, 10) zuläßt. Die Schutzkonstruktion besteht aus einer Schutzwand (3, 8) und aus Strukturen (4, 11). Diese Strukturen (4, 11) stehen mit senkrechten Wänden (1a) des Gebäudes (1) oder mit einer senkrechten Schutzwand (3) über Verbindungsmittel in Verbindung, die eine horizontale Verschiebung des Gebäudes (1, 10) verhindern und eine vertikale Verschiebung zulassen.

FIG 2

EP 0 418 407 A1

## VERFAHREN UND EINRICHTUNG ZUM SCHUTZ EINES GEBÄUDES

Die Erfindung betrifft ein Verfahren zum Schutz eines Gebäudes. Sie betrifft auch eine Einrichtung zur Durchführung des Verfahrens. Ein derartiges Verfahren dient dazu, von außen wirkende Kräfte vom Gebäude fernzuhalten. Solche Kräfte sind insbesondere Erdbebenkräfte, die weitgehend parallel zur Erdoberfläche gerichtet sind. In einem Gebäude, das keine Schutzvorrichtungen aufweist, werden durch einwirkende Erdbebenkräfte Schwingungen erzeugt, die zu Beschädigungen am Gebäude führen können. Um dieses zu verhindern, sind bereits verschiedene Schutzvorrichtungen konstruiert worden. Aus der DE-PS 28 35 877 ist eine solche Schutzvorrichtung bekannt, die sich durch ein wannenartiges Fundament auszeichnet, in dem das Gebäude auf Stoßdämpfern und anderen Dämpfungskörpern abgestützt gelagert ist. Dabei ist das Gebäude sowohl vertikal als auch horizontal über Stoßdämpfer abgestützt. Aus dem Erdboden kommende Kräfte werden mit dieser Vorrichtung unabhängig von ihrer Richtung gedämpft, bevor sie das Gebäude erreichen können.

Ein derartiges Verfahren und eine solche Schutzvorrichtung sind aufwendig und damit kostenintensiv. Zur Abstützung des gesamten schweren Gebäudes auf Dämpfungsvorrichtungen ist es nämlich erforderlich, wegen der großen Last sehr stabile und damit teuere Stoßdämpfer einzusetzen. Beim Neubau eines Gebäudes ist ein erhöhter Zeit- und Kostenaufwand dadurch gegeben, daß das gesamte Gebäude ausschließlich auf Stoßdämpfern und Dämpfungsmitteln ruht. Eine Nachrüstung eines bereits fertiggestellten Gebäudes ist mit den genannten Mitteln technisch kaum durchführbar.

Der Erfindung lag die Aufgabe zugrunde, ein Verfahren zum Schutz eines Gebäudes anzugeben, das mit einer Einrichtung auskommt, die auch an bereits fertiggestellten Gebäuden nach träglich aufzubauen ist, wenig Baumaterial benötigt und trotzdem einen guten Schutz gegen Erdbebenstöße bietet. Es soll auch eine geeignete Einrichtung angegeben werden.

Die erstgenannte Aufgabe wird gemäß der Erfindung dadurch gelöst, daß eine auf das Gebäude einwirkende horizontale Kraft, insbesondere eine durch ein Erdbeben erzeugte Trägheitskraft, vom Gebäude auf eine das Gebäude seitlich umschließende Schutzkonstruktion abgeleitet wird, die eine vertikale Bewegung des Gebäudes zuläßt.

Eine geeignete Einrichtung zur Durchführung dieses Verfahrens ist dadurch gegeben, daß das Gebäude seitlich umschließend eine Schutzwand angeordnet ist und daß zwischen der Schutzwand und Wänden des Gebäudes Strukturen, insbesondere horizontal angeordnete Strukturen, angeordnet sind, die mit einer der beiden benachbarten Wände fest verbunden sind und mit der anderen Wand, die eine senkrechte Wand ist, über Verbindungsmittel in Verbindung stehen. Diese Verbindungsmittel verhindern eine horizontale Verschiebung des Gebäudes, lassen aber eine vertikale Verschiebung zu.

Eine solche Schutzeinrichtung oder Schutzkonstruktion umgibt das zu schützende Gebäude, erstreckt sich aber nicht bis unter das Gebäude. Das ist auch nicht erforderlich, da Erdbebenkräfte, die für das Gebäude gefährlich sein können, stets weitgehend paraLlel zur Erdoberfläche gerichtet sind. Es wurde erkannt, daß eine Schutzeinrichtung, die nur horizontal wirkende Kräfte vom Gebäude aufnimmt, bereits einen guten Schutz vor allen Erdbebeneinwirkungen bietet.

Weil die Schutzeinrichtung das Gebäude nur seitlich umgibt, kommt sie mit wenig Baumaterial aus. Eine zusätzliche Baukostenersparnis wird erzielt, falls die Schutzwand der Schutzeinrichtung eine besonders hohe Steifigkeit bei geringer Masse hat.

Gebäudeschwingungen, die durch Erdbebenkräfte induziert werden, werden fast vollständig auf die Schutzwand übertragen. Dort werden die Schwingungen bedingt durch die Steifigkeit und durch die kleine Masse der Schutzwand so weit reduziert, daß sie ungefährlich sind. Eine freie Schwingung des Gebäudes wird also durch die Schutzeinrichtung verhindert, bevor es zu Schäden kommen kann. Die Schutzwirkung wird verstärkt, falls eine hohe Steifigkeit der Schutzwand gegeben ist.

Durch die Schutzkonstruktion nach der Erfindung wird eine Minderung der horizontalen Kräfte bewirkt, ohne daß aufwendige Stoßdämpfer erforderlich sind. Die Ableitung der wesentlichen Horizontalkräfte in den Erdboden erfolgt allein in der Schutzwand.

Zur Übertragung von Kräften vom Gebäude auf die Schutzwand dienen die mit einer Wand, z.B. mit der Schutzwand, fest verbundenen Strukturen, die sich bis an die gegenüberliegende senkrechte Wand, z.B. bis an vertikale Wände des Gebäudes, erstrecken. Diese Strukturen bilden eine kraftschlüssige Verbindung in horizontaler Richtung zwischen Gebäude und Schutzwand, ohne daß eine feste Verbindung besteht. Dadurch werden die horizontal verlaufenden Erdbebenkräfte optimal abgeleitet. Eine Verschiebung der Strukturen relativ zum Gebäude in vertikaler Richtung ist aber ungehindert möglich. Einander entgegen gerichtete kleine Bewegungen des Gebäudes und der Schutzeinrichtung in vertikaler Richtung, die durch ein geringes Absinken der Fundamente verursacht sein können, beeinträchtigen die Funktion der Strukturen zwischen der Schutzwand und dem Gebäude nicht. Der Berührungspunkt einer Struktur, z.B. am Gebäude, verschiebt sich relativ zu einer vertikalen Wand des Gebäudes. Da eine feste Verbindung nicht besteht, bleibt die Struktur unbeschädigt. Eine kraftschlüssige Verbindung in durch die Struktur vorgegebener horizontaler Richtung bleibt dabei stets erhalten.

Mit einer derartigen Schutzeinrichtung wird der Vorteil erzielt, daß mit Baumaßnahmen, die wenig Aufwand benötigen, eine Beschädigung eines Gebäudes durch Erdbebenkräfte zu verhindern ist. Die Schutzeinrichtung ist sogar mit überschaubaren Baumaßnahmen an einem fertiggestellten Gebäude nachträglich anzubringen. Die Strukturen der Schutzeinrichtung sind in der Regel horizontal angeordnet, sie können aber auch zur Horizontalen geneigt angeordnet sein.

Beispielsweise sind die Strukturen bis auf enge Fugen an vertikale Wände, in der Regel an vertikale Wände des Gebäudes, heran erstreckt. In diesen Fugen befindet sich als Verbindungsmittel ein flexibler Stoff. Der flexible Stoff ist beispielsweise Teer, mit dem die Fugen vergossen sind. Der flexible Stoff ermöglicht eine besonders gute Kraftübertragung vom Gebäude über die Strukturen auf die Schutzwand und gestattet gleichzeitig eine Verschiebung der Endpunkte der Strukturen auf vertikalen Wänden, in der Regel auf der Gebäudeaußenwand.

Nach einem anderen Beispiel sind zwischen den Strukturen und dem Gebäude oder der vertikalen Schutzwand als Verbindungsmittel als solche bekannte Gleitlager angeordnet. Solche Gleitlager sind vom Brückenbau bekannt. Sie sind bei der Einrichtung nach der Erfindung vertikal angeordnet, so daß sie bei kraftschlüssiger Verbindung eine vertikale Verschiebung des Gebäudes gegen die Schutzwand gestatten und eine horizontale Verschiebung verhindern. Durch den Einsatz von Gleitlagern wird eine spannungsfreie Bewegung in vertikaler Richtung ermöglicht, während eine steife Verbindung in horizontaler Richtung, also in Richtung der Erdbebenkräfte besteht.

Die das Gebäude umschließende Schutzwand bildet beispielsweise einen Zylindermantel oder einen Kegelstumpfmantel. Eine solche Mantelstruktur weist kein Dach auf. Ein Dach ist auch nicht erforderlich, da ausschließlich weitgehend parallel zur Erdoberfläche gerichtete Kräfte übertragen werden sollen. Das Gebäude kann allein durch einen es umgebenden Mantel geringer Masse und großer Steifigkeit vor horizontal gerichteten Erdbebenkräften geschützt sein. Da Erdbebenkräfte fast ausschließlich in horizontaler Richtung wirken, ist schon durch einen Zylinder- oder einen Kegelstumpfmantel ein guter Erdbebenschutz gegeben.

Nur beispielsweise kann auf der Schutzwand, den Raum innerhalb der Schutzwand überdeckend, ein Dach angeordnet sein. Ein solches Dach ist aber für den Erdbebenschutz nicht erforderlich. Es kann zusammen mit der Schutzwand eine Überbauung des Gebäudes ersetzen, die einen zusätzlichen Wetterschutz bietet.

Die Schutzwand kann gegründet sein auf einen mit dem Gebäude gemeinsamen Fundament oder auf einem vom Gebäudefundament getrennten eigenen Fundamentkörper.

Mit dem Verfahren nach der Erfindung und mit der nach der Erfindung aufgebauten Schutzeinrichtung wird der Vorteil erzielt, daß mit einfachen bautechnischen Mitteln ein Gebäude gegen Einwirkungen von Erdbeben zu schützen ist. Dabei werden durch Erdbeben induzierte freie Gebäudeschwingungen weitgehend verhindert.

Ein Gebäude, das mit einer Schutzeinrichtung, wie sie nach der Erfindung vorgesehen ist, ausgestattet ist, wird anhand der Zeichnung näher erläutert.

FIG 1 zeigt eine Schutzwand, die einen Zylindermantel bildet, und Fugen zwischen den Strukturen und dem Gebäude, die mit einem flexiblen Stoff vergossen sind.

FIG 2 zeigt eine Schutzwand, die einen Zylindermantel bildet, und zwischen den Strukturen und dem Gebäude angeordnete Gleitlager.

FIG 3 zeigt eine Schutzwand, die einen Kegelstumpfmantel bildet und zwischen den Strukturen und dem Gebäude angeordnete Gleitlager.

FIG 4 zeigt eine Schutzwand, die einen Kegelstumpfmantel bildet und mit einem Dach versehen ist, sowie separate Fundamentkörper und mit einem flexiblen Stoff vergossene Fugen zwischen den Strukturen und dem Gebäude.

FIG 5 zeigt eine Schutzwand, die einen Zylindermantel bildet und ein Gebäude umgibt, das nicht senkrechte Wände aufweist, sowie zwischen den Strukturen und dem Zylindermantel angeordnete Gleitlager.

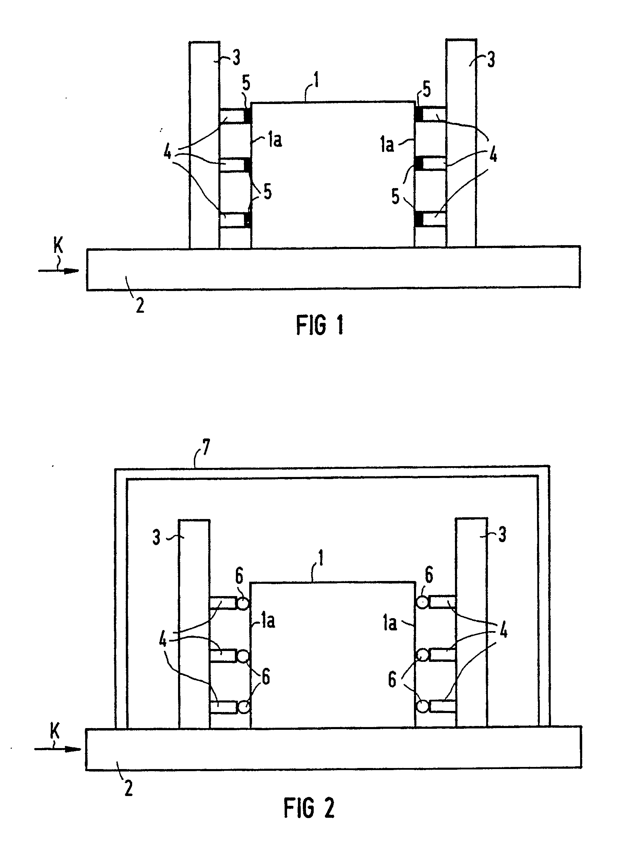

Ein Gebäude 1, das beispielsweise ein Kernkraftwerk ist, ist nach Figur 1 auf einer Fundamentplatte 2 angeordnet. Zum Schutz vor horizontal in Richtung des Pfeiles K einwirkenden Erdbebenkräften ist das Gebäude 1 von einer Schutzwand 3 einer Schutzeinrichtung oder Schutzkonstruktion umgeben, die einen Zylindermantel bildet. Dabei bleibt zwischen dem Gebäude 1 und der Schutzwand 3 ein Ringraum frei. An der Schutzwand 3 sind innen mehrere Strukturen 4 angeformt, die sich auf senkrechte Wände 1a des Gebäudes 1 hin gerichtet bis dicht an das Gebäude 1 heran erstrecken. In den meisten Fällen sind die Strukturen 4 wie in Figur 1 horizontal angeordnet und enden eine kurze Strecke vor vertikalen Wänden 1a des Gebäudes 1. Nach Figur 1 sind die zunächst verbleibenden Fugen 5 zwischen den Strukturen 4 und den vertikalen Wänden 1a des Gebäudes 1 mit einem flexiblen Stoff, beispielsweise mit Teer, vergossen. Beim Einwirken einer Erdbebenkraft in Richtung des Pfeiles K werden Schwingungen des Gebäudes 1 in horizontaler Richtung von der steifen Schutzwand 3 aufgenommen und gedämpft. Dadurch kann es nicht zu Schwingungen großer Amplitude des Gebäudes 1 kommen, was zu Zerstörungen im Gebäude 1 führen könnte. Vertikale Bewegungen des Gebäudes 1 relativ zur Schutzwand 3 sind jedoch möglich, da der flexible Stoff in den Fugen 5 eine gleitende vertikale Bewegung gestattet.

Vertikale Verschiebungen führen daher nicht zu Beschädigungen z.B an den Strukturen. Ebenso sind geringe horizontale Bewegungen, die beispielsweise durch Temperaturunterschiede hervorgerufen werden, wegen der Flexibilität des die Fugen 5 ausfüllenSden Stoffes ohne Beschädigungen möglich.

Die Schutzeinrichtung nach Figur 2 ist in Aufbau und Funktion der Schutzeinrichtung nach Figur 1 weitgehend ähnlich. Die Abstände zwischen an der Schutzwand 3 angeformten Strukturen 4 und vertikalen Wänden 1a des auf der Fundamentplatte 2 angeordneten Gebäudes 1 sind jedoch größer als bei der Ausführungsform nach Figur 1. In den Zwischenräumen zwischen den Strukturen 4 und den vertikalen Wänden 1a des Gebäudes 1 sind Gleitlager 6 angeordnet. Solche Gleitlager 6 sind beim Brückenbau bekannt. Sie gestatten dort z.B. temperaturbedingte Längenveränderungen des Brückenaufliegers. An den Strukturen 4 nach Figur 2 gestatten die Gleitlager 6 vertikale Verschiebungen der Schutzwand 3 und des Gebäudes 1 relativ zueinander. Das Gebäude 1 nach Figur 2 ist zusammen mit der Schutzwand 3 von einem zusätzlichen Außengebäude 7 umschlossen. Das Außengebäude 7 kann einen zusätzlichen Schutz gegen Einwirkungen von außen darstellen.

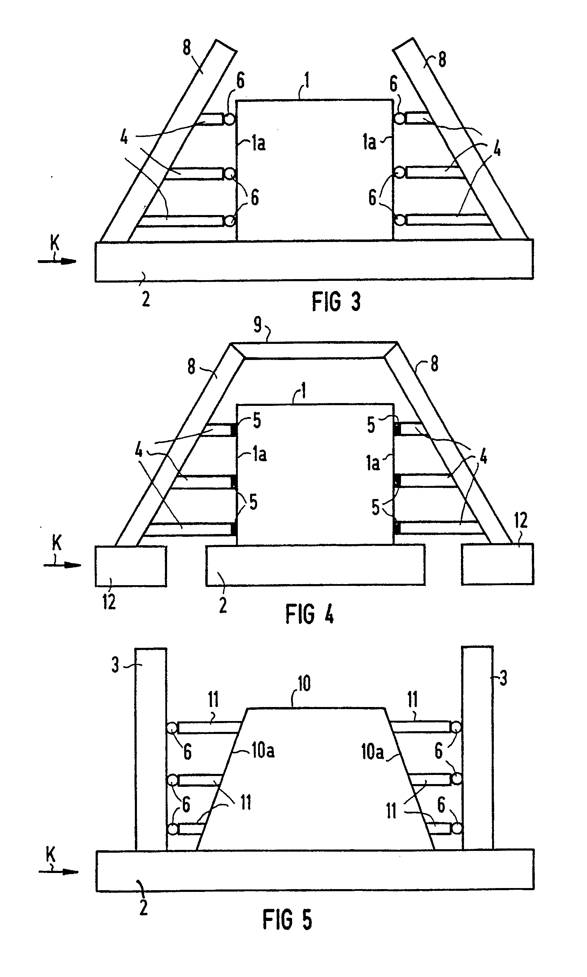

Auch die Ausführungsform der Schutzeinrichtung nach Figur 3 stimmt weitgehend mit den zuvor gezeigten Ausführungsformen überein. Ein Unterschied ist darin zu sehen, daß eine Schutzwand 8 statt einen Zylindermantel einen Kegelstumpfmantel bildet. Sie ist also nicht senkrecht sondern nach innen zu dem auf der Fundamentplatte 2 angeordneten Gebäude 1 hin geneigt angeordnet. An der Schutzwand 8 angeformte Strukturen 4 sind jedoch horizontal verlaufend angeordnet. In Zwischenräumen zwischen den Strukturen 4 und vertikalen Wänden 1a des Gebäudes 1 sind wie bei Figur 2 Gleitlager 6 angeordnet.

Die Ausführungsform nach Figur 4 ist weitgehend eine Kombination aus den Ausführungsformen der Figuren 1 bis 3. Das Gebäude 1 ist auf dem Fundament 2 gegründet. Die Schutzwand 8 ist auf Fundamentkörpern 12 gegründet, die vom Fundament 2 des Gebäudes 1 getrennt sind. Diese Bauweise eignet sich besonders für die Nachrüstung eines Gebäudes 1. Die Schutzwand 8 bildet wie bei Figur 3 einen Kegelstumpfmantel. Horizontale an die Schutzwand 8 angeformte Strukturen 4 führen unter Freilassung von Fugen 5 bis an senkrechte Wände 1a des auf der Fundamentplatte 2 angeordneten Gebäudes 1 heran. Die freibleibenden Fugen 5 sind mit einem flexiblen Stoff wie bei der Ausführungsform nach Figur 1 vergossen. Nach Figur 4 ist auf der Schutzwand 8 den Raum, den die Schutzwand 8 umschließt, überdeckend ein Dach 9 angeordnet. Das Dach 9 ist für den Schutz vor horizontal einwirkenden Erdbebenkräften nicht erforderlich. Das Dach 9 ermöglicht nur einen zusätzlichen Schutz vor Einwirkungen von außen und macht daher ein zusätzliches Außengebäude 7 gemäß Figur 2 entbehrlich.

Nach FIG 5 ist ein Gebäude 10, das schräge Wände 10a aufweist, auf einer Fundamentplatte 2 angeordnet und von der Schutzwand 3, die einen Zylindermantel bildet, umgeben. Horizontale Strukturen 11 sind an die schrägen Wände 10a des Gebäudes 10 angeformt. Zwischen den Strukturen 11 und der Schutzwand 3 befinden sich Gleitlager 6. Mit dieser Ausführungsform ist es möglich, horizontale Bewegungen eines Gebäudes 10 zu dämpfen und vertikale Bewegungen zu ermöglichen, falls das Gebäude 10 keine senkrechten Wände aufweist.

Ein auf der Schutzwand 3, 8 angeordnetes Dach kann, obwohl dort nicht dargestellt, auch bei den Ausführungsformen der Schutzeinrichtung nach den Figuren 1, 2, 3 oder 5 vorhanden sein. Ebenso ist die Ausführungsform nach Figur 4 auch ohne Dach 9 funktionsfähig.

Zusätzliche Außengebäude entsprechend dem Außengebäude 7 nach Figur 2 können auch die mit Schutzeinrichtungen ausgestatteten Gebäude 1, 10, gemäß den Figuren 1, 3, 4 oder 5 überspannen. Die Ausführungsform nach Figur 2 kann auch ohne das Außengebäude 7 auskommen.

Zwischen den Strukturen 11 nach FIG 5 und der Schutzwand 3 können statt der Gleitlager 6 auch Fugen 5 angeordnet sein, die aus den Figuren 1 und 4 bekannt sind und die mit einem flexiblen Stoff, beispielsweise mit Teer, vergossen sind.

Auch bei den Ausführungsformen nach FIG 1 oder 2 können die Strukturen 4 mit dem Gebäude 1 fest verbunden sein und mit der senkrechten Schutzwand 3 über vergossene Fugen 5 oder über Gleitlager 6 in Verbindung stehen.

Separate Fundamente 12 für die Schutzwände 3, 8 wie in FIG 4 gezeigt, können auch bei den Ausführungsformen nach den Figuren 1, 2, 3 oder 5 vorhanden sein. Ebenso ist die Ausführungsform nach FIG 4 auch mit einem gemeinsamen Fundament für Gebäude 1 und Schutzwand 8 funktionsfähig.

Mit einer der Einrichtungen nach der Erfindung wird eine einwirkende horizontale Kraft K, insbesondere eine durch ein Erdbeben erzeugte Trägheitskraft, vom Gebäude 1, 10, auf die Schutzwände 3, 8, abgeleitet. Schwingungen des Gebäudes 1, 10, infolge von Erdbeben werden dadurch in hohem Maße gedämpft. Schwingungsamplituden, die zu Beschädigungen führen könnten, werden ausgeschlossen. Gleichzeitig werden vertikale Bewegungen des Gebäudes 1, 10, nicht behindert.

## Ansprüche

1. Verfahren zum Schutz eines Gebäudes (1, 10)
**dadurch gekennzeichnet,**
daß eine auf das Gebäude (1, 10) einwirkende horizontale Kraft (K), insbesondere eine durch ein Erdbeben erzeugte Trägheitskraft, vom Gebäude (1, 10) auf eine das Gebäude (1, 10) seitlich umschließende Schutzkonstruktion abgeleitet wird, die eine vertikale Bewegung des Gebäudes (1, 10) zuläßt.

2. Einrichtung zur Durchführung des Verfahrens nach Anspruch 1,
**dadurch gekennzeichnet,**
daß das Gebäude (1, 10) seitlich umschließend eine Schutzwand (3, 8) angeordnet ist und daß zwischen der Schutzwand (3, 8) und Wänden (1a, 10a) des Gebäudes (1, 10) Strukturen (4, 11), insbesondere horizontal angeordnete Strukturen, angeordnet sind, die mit einer der beiden benachbarten Wände (3, 8, 1a, 10a) fest verbunden sind und mit der anderen Wand (1a, 3), die eine senkrechte Wand (1a, 3) ist, über Verbindungsmittel in Verbindung stehen, die eine horizontale Verschiebung des Gebäudes (1, 10) verhindern und eine vertikale Verschiebung des Gebäudes (1, 10) zulassen.

3. Einrichtung nach Anspruch 2,
**dadurch gekennzeichnet,** daß sich die Strukturen (4, 11) bis auf enge Fugen (5) an senkrechte Wände (1a) des Gebäudes (1) oder an die senkrechte Schutzwand (3) heran erstrecken und daß als Verbindungsmittel in den Fugen (5) diese ausfüllend ein flexibler Stoff sich befindet.

4. Einrichtung nach Anspruch 3,
**dadurch gekennzeichnet,**
daß die Fugen (5) mit Teer vergossen sind.

5. Einrichtung nach Anspruch 2,
**dadurch gekennzeichnet,**
daß zwischen den Strukturen (4, 11) und dem Gebäude (1) oder der senkrechten Schutzwand (3) als Verbindungsmittel vertikale Gleitlager (6) angeordnet sind, die eine Verschiebung des Gebäudes (1) und der Schutzwand (3) gegeneinander in vertikaler Richtung gestatten und in horizontaler Richtung verhindern.

6. Einrichtung nach einem der Ansprüche 1 bis 5,
**dadurch gekennzeichnet,**
daß die das Gebäude (1, ,10) umschließende Schutzwand (3) einen Zylindermantel bildet.

7. Einrichtung nach einem der Ansprüche 1 bis 5,
**dadurch gekennzeichnet,**
daß die das Gebäude (J) umschließende Schutzwand (8) einen Kegelstumpfmantel bildet.

8. Einrichtung nach einem der Ansprüche 1 bis 7,
**dadurch gekennzeichnet,**
daß auf der Schutzwand (3, 8) den Raum innerhalb der Schutzwand (3, 8) überdeckend ein Dach (9) angeordnet ist.

9. Einrichtung nach einem der Ansprüche 1 bis 8,
**dadurch gekennzeichnet,**
daß die Schutzwand (3, 8) und das Gebäude (1, 10) auf einem gemeinsamen Fundament (2) gegründet sind.

10. Einrichtung nach einem der Ansprüche 1 bis 8,
**dadurch gekennzeichnet,**
daß die Schutzwand (3, 8) auf mindestens einem Fundamentkörper (12) gegründet ist, der von einem Fundament (2) des Gebäudes (1, 10) getrennt ist.

FIG 1

FIG 2

FIG 3

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 101 378 (ELECTRICITE DE FRANCE) * Seite 1, Zeilen 9-17; Seite 3, Zeilen 10-29; Seite 4, Zeile 35 - Seite 5, Zeile 26; Seite 6, Zeilen 23-30; Seite 7, Zeilen 4-22; Seite 8, Zeile 22 - Seite 9, Zeile 4; Seite 9, Zeile 18 - Seite 10, Zeile 24; Abbildungen * | 1-5,8,9 | E 04 H 9/02 G 21 C 9/04 |
| Y | | 10 | |
| Y | DE-A-3 530 091 (KRAFTWERK UNION) * Spalte 2, Zeilen 54-61; Abbildungen * --- | 10 | |
| A | FR-A-2 221 953 (CEA) * Seite 1, Zeile 31 - Seite 2, Zeile 28; Seite 3, Zeilen 10-32; Seite 4, Zeile 15 - Seite 5, Zeile 8; Abbildungen * ----- | 1,2,3,5 ,9 | |

| RECHERCHIERTE SACHGEBIETE (Int. Cl.5) |
|---|
| E 04 B E 04 H E 02 D G 21 C |

Der vorliegende Recherchenbericht wurde für alle Patentansprüche erstellt

| Recherchenort | Abschlußdatum der Recherche | Prüfer |
|---|---|---|
| DEN HAAG | 05-04-1990 | LAUE F.M. |